**Europäisches Patentamt**

**European Patent Office**

**Office européen des brevets**

(19)

(11) Veröffentlichungsnummer: **0 202 609**
**B1**

(12) # EUROPÄISCHE PATENTSCHRIFT

(45) Veröffentlichungstag der Patentschrift:
22.08.90

(51) Int. Cl.⁵: **C09D 7/12, C09D 5/02**

(21) Anmeldenummer: 86106632.2

(22) Anmeldetag: 15.05.86

(54) Anstrichfarben mit einem Zusatz an einer grobteiligen Polystyrol-Dispersion.

(30) Priorität: 24.05.85 DE 3518671

(43) Veröffentlichungstag der Anmeldung:
26.11.86 Patentblatt 86/48

(45) Bekanntmachung des Hinweises auf die Patenterteilung:
22.08.90 Patentblatt 90/34

(84) Benannte Vertragsstaaten:
AT BE CH DE FR GB IT LI NL SE

(56) Entgegenhaltungen:
DE-C- 748 392
US-A- 2 944 040
US-A- 4 477 623

(73) Patentinhaber: BASF Aktiengesellschaft,
Carl-Bosch-Strasse 38, D-6700 Ludwigshafen(DE)

(72) Erfinder: Wendel, Kurt, Dr., Woehlerstrasse 26,
D-6700 Ludwigshafen(DE)
Erfinder: Melan, Michael, Dr., Hans-Willmann-Strasse 4,
D-6706 Wachenheim(DE)
Erfinder: Wistuba, Eckehardt, Dr., Im Obergarten 7,
D-6702 Bad Duerkheim(DE)
Erfinder: Wulgaris, Savas, Dr., Kranichstrasse 7,
D-6700 Ludwigshafen(DE)

## Beschreibung

Anstrichfarben und Kunstharz-gebundene Putze enthalten im allgemeinen neben üblichen polymeren Bindemitteln, meist auf Basis von wäßrigen Polymerisat-Dispersionen, sowie gegebenenfalls Verlaufsmitteln als wesentlichen Bestandteil anorganische Pigmente. Als solche sind in den Anstrichfarben meist verschiedene Rutil-Typen sowie hochwertige Füllstoffe, z.B. Aluminiumsilikate und gefällte Calciumcarbonate enthalten, durch die eine gute Trocken- und Naßdeckkraft erreicht wird. Auch die Scheuerbeständigkeit von Innenfarben wird durch die anorganischen Pigmente positiv beeinflußt. Dabei wird aber oft die hohe Dichte als nachteilig empfunden. In Kunstharz gebundenen Putzen sind neben den polymeren Bindemitteln und gegebenenfalls Verdickungsmitteln feinkörniges Steingranulat enthalten, dessen hohe Dichte ebenfalls oft als ungünstig angesehen wird.

Die US-PS 2 944 040 bezieht sich auf filmogene Gummidispersionen, die zusätzlich ein hochkristallines Polyethylen-Polymeres enthalten.

Die DE-A 748 329 beschreibt Anstrichmitteldispersionen, die eine Lösung von Polystyrol oder seinen Chlorierungsprodukten in einem flüchtigen organischen Lösungsmittel, schwerflüchtige alkylierte oder halogenierte aromatische Kohlenwasserstoffe und mit Polystyrol oder seinen Chlorierungsprodukten verträgliche, wasserunlösliche Polymerisate, die geringe Mengen hydrophile Gruppen enthalten, z.B. Mischpolymerisate aus Vinylbenzoat mit geringen Mengen Acrylsäure, in Wasser dispergiert enthalten.

Die US-PS 4 477 623 betrifft Anstrichfarben auf der Basis von wäßrigen Polymerisat-Dispersionen, die als polymere Bindemittel wenigstens ein wasserunlösliches Copolymerisat, aufgebaut aus wenigstens einem der Monomeren Styrol, Acrylsäureester, Methacrylsäureester, Vinylester und Vinylchlorid sowie in Mengen von 0,1 bis 5 Gew.%, bezogen auf die Gesamtmenge an Monomeren, aus wenigstens einer olefinisch ungesättigten Phosphor-, Sulfon- oder Carbonsäure, und ein alkalilösliches Polymerisat auf der Basis von Acrylsäure- oder Methacrylsäureestern und ungesättigten Mono- oder Dicarbonsäuren enthalten.

Es wurde nun gefunden, daß Anstrichfarben und Kunstharz-gebundene Putze auf der Basis polymerer Bindemittel und anorganischer Pigmente, wobei die Bindemittel in Form einer wäßrigen Polymer-Dispersion vorliegen, besonders vorteilhafte Eigenschaften haben, wenn ihre Bindemittelkomponente ein Gemisch ist aus

a) einer für wäßrige Anstrichfarben üblichen wäßrigen Styrol-(Meth)acrylsäureester-Copolymerisat-Dispersion in einer Menge, die 100 Gewichtsteilen einer 50-gewichtsprozentigen Dispersion entspricht, und

b) einer, einen Feststoffgehalt von 30 bis 65 Gew.% sowie eine Teilchengröße von 100 bis 300 nm aufweisenden wäßrigen Polystyrol-Dispersion in einer Menge, die 150 bis 400 Gewichtsteilen einer 50-gewichtsprozentigen Dispersion entspricht.

Derartige Anstrichfarben bzw. Kunstharz-gebundene Putze weisen nicht nur eine verringerte Dichte auf, sondern zeichnen sich zudem überraschenderweise durch verbesserte Naßscheuerfestigkeit aus.

Die wäßrigen Polystyrol-Dispersionen können in an sich üblicher Weise, beispielsweise nach Angaben der US-PS 4 248 939 durch Emulsionspolymerisation in Gegenwart von Polyvinylalkohol oder von Acrylamid-Copolymerisaten hergestellt sein. Bevorzugt werden sie mit einem Feststoffgehalt von 45 bis 55 Gew.% eingesetzt; ihre Viskosität beträgt im allgemeinen 50 bis 1500 mPas, vorzugsweise 100 bis 800 mPas. Die Polystyrol-Dispersionen sind somit grobteilig, und sie sollen im allgemeinen eine breite Teilchengrößenverteilung haben. Zusätzlich zu Styrol können die Styrolpolymerisate noch bis zu 5 Gew.%, bezogen auf die gesamten Monomeren, andere Monomere, insbesondere wasserlösliche Monomere, wie vorzugsweise 3 bis 5 C-Atome enthaltende, α,β-monoolefinisch ungesättigte Mono- und Dicarbonsäuren sowie deren gegebenenfalls an den Amidstickstoffatomen substituierte Amide einpolymerisiert enthalten. Beispiele für derartige Comonomere sind besonders Acryl- und Methacrylsäure und deren Amide sowie N-Methylol-(meth)acrylamid, Maleinsäure, Itakonsäure, Maleinsäuremonomethylester und Itakonsäuremonoethylester.

Die Menge der, auf einen Feststoffgehalt von 50 Gew.% bezogen, wäßrigen Polystyrol-Dispersion soll 150 bis 400 Gewichtsteile, bezogen auf 100 Gewichtsteile einer 50%igen, als Bindemittel eingesetzten Polymerdispersion, betragen. Durch die Polystyrol-Dispersionen können in den Anstrichfarben anorganische Pigmente und in den Kunstharz-gebundenen Putzen feinteiliges Gesteingranulat ersetzt werden. Dabei soll die Menge an dem in Form der auf einen Feststoffgehalt von 50 Gew.% bezogenen wäßrigen Dispersion eingebrachten Polystyrol, bezogen auf die Pigmente, Füllstoffe bzw. das feinteilige Gesteinsgranulat 10 bis 300, vorzugsweise 20 bis 250 Gew.%, betragen.

Als Pigmente kommen für die neuen Anstrichfarben die hierfür üblichen Stoffe, z.B. Rutil sowie Lithopone und Bleiweiß oder auch übliche Farbpigmente und zusätzlich Füllstoffe, wie Aluminiumsilikate und gefällte Calciumcarbonate in Frage, und von den als Bindemittel für wäßrige Anstrichfarben üblichen wäßrigen Polymer-Dispersionen werden solche auf Basis von Styrol-(meth)acrylsäureester-Copolymerisaten, Acrylester-Copolymerisaten und Vinylester-Copolymerisaten vorgezogen, die im allgemeinen eine Mindestfilmbildetemperatur (MFT) von 5 bis 50°C haben.

Die neuen Anstrichfarben und Kunstharz-gebundenen Putze ergeben Beschichtungen, die gute Deckkraft und Naßscheuerfestigkeit aufweisen und die vor allem auch auf mineralischen Untergründen, wie Hauswänden, gut haften und die eine verminderte Dichte besitzen.

Die in den folgenden Beispielen angegebenen Teile und Prozente beziehen sich auf das Gewicht.

Beispiel 1

In üblicher Weise wurde durch Vermischen der im folgenden angegebenen Komponenten eine Innenfarbe (A) mit einem Gehalt an Polystyrol-Dispersion sowie zum Vergleich eine Innenfarbe (B) hergestellt, die keine Polystyrol-Dispersion, dafür aber eine erhöhte Menge an Rutil und gefälltem Calciumcarbonat enthielt:

Tabelle 1

| Innenfarbe | A | B (Vergleich) |
|---|---|---|
| Wasser | 11,7 | 37,5 |
| Polystyroldispersion, 50,0 %ig (hergestellt in Gegenwart von Polyvinylalkohol gemäß Bsp. 3 der US-PS 4 248 939, Teilchengröße 300 nm) | 50,6 | - |
| Polyacrylat Na-Salz, 30 %ig | 2 | 2 |
| Polyphosphat, 10 %ig | 2 | 2 |
| wäßrige Ammoniaklösung, 25 %ig | 1 | 1 |
| Entschäumer, Silikonbasis | 1 | 1 |
| Filmbildehilfsmittel | 5 | 5 |
| Propylenglykol | 5 | 5 |
| Hydroxiethylcellulose, 2 %ig | 125 | 125 |
| Rutil | 20 | 30 |
| Aluminiumsilikat | - | 5 |
| Calciumcarbonat | 210 | 210 |
| gefälltes Calciumcarbonat | 20 | 30 |
| handelsübl. Entschäumer, Silikonbasis | 1 | 1 |
| Acrylat-Styrol-Copolymer-Dispersion, 50 %ig | 34 | 34 |

Die Innenfarben (A) und (B) wiesen die in der folgenden Tabelle 2 angegebenen Dichten, Scheuerfestigkeiten und Kontrastverhältnisse auf:

Tabelle 2

| Innenfarbe-Eigenschaften | A | B (Vergleich) |
|---|---|---|
| Dichte 23°C (g/cm$^3$) | 1,458 | 1,511 |
| Naßscheuerfestigkeit (Zyklen) (DIN 53 778) | 620 | 500 |
| Kontrastverhältnis (DIN 53 778/3) | 98,1 % | 98,3 % |

3

Beispiel 2

Innenfarbe-Zusammensetzung

| | |
|---|---|
| Wasser | 71,95 |
| Polyacrylat Na-Salz, 30 %ig | 6,25 |
| Polyphosphat, 25 %ig | 25,00 |
| Ammoniak, 25 %ig | 6,25 |
| Polyurethanverdicker, 25 %ig | 31,5 |
| Testbenzin | 31,5 |
| Butylglykol | 47,5 |
| Silikonentschäumer | 6,25 |
| Rutil | 196,00 |
| Polystyroldisperison, 40 %ig (herge-stellt nach Beispiel 3 der US-PS 4 248 939 unter Verwendung von Polyvinylalkohol; Teilchengröße 250 nm) | 450,3 |
| Acrylat-Styrol-Copolymer-Dispersion, 50 %ig | 127,5 |

Innenfarbe-Eigenschaften

| | |
|---|---|
| Dichte 23°C (g/cm$^3$) | 1,19 |
| Naßscheuerfestigkeit (Zyklen) (DIN 53 778) | >10.000 |
| Kontrastverhältnis (DIN 53 778/3) | 97,5 |

**Patentansprüche**

Anstrichfarben und Kunstharz-gebundene Putze auf der Basis polymerer Bindemittel und anorganischer Pigmente, wobei die Bindemittel in Form einer wäßrigen Polymer-Dispersion vorliegen, dadurch gekennzeichnet, daß ihre Bindemittelkomponente ein Gemisch ist aus
(a) einer für wäßrige Anstrichfarben üblichen wäßrigen Styrol-(Meth)acrylsäureester-Copolymerisat-Dispersion in einer Menge, die 100 Gewichtsteilen einer 50-gewichtsprozentigen Dispersion entspricht, und
(b) einer, einen Feststoffgehalt von 30 bis 65 Gewichtsprozent sowie eine Teilchengröße von 100 bis 300 nm aufweisenden wäßrigen Polystyrol-Dispersion in einer Menge, die 150 bis 400 Gewichtsteilen einer 50-gewichtsprozentigen Dispersion entspricht.

**Claims**

A paint or synthetic resin-bonded render based on polymeric binders and inorganic pigments, the binders being in the form of an aqueous polymer dispersion, wherein its binder component is a mixture of
(a) an aqueous styrene/(meth)acrylate copolymer dispersion conventionally used for aqueous paints, in an amount which corresponds to 100 parts by weight of a 50% strength by weight dispersion, and
(b) an aqueous polystyrene dispersion having a solids content of from 30 to 65% by weight and a particle size of from 100 to 300 nm, in an amount which corresponds to 150–400 parts by weight of a 50% strength by weight dispersion.

**Revendications**

Peintures et enduits liés à la résine synthétique, à base de liants polymères et de pigments inorganiques, où les liants se présentent sous la forme d'une dispersion aqueuse de polymère, caractérisés en ce que leur composant formant les liants est constitué par un mélange

(a) d'une dispersion aqueuse d'un copolymère de styrène et d'ester de l'acide (méth)acrylique, courante pour des peintures aqueuses, en une proportion qui correspond à 100 parties en poids d'une dispersion à 50% en poids et
(b) d'une dispersion aqueuse de polystyrène présentant une teneur en corps solides de 30 à 65% en poids, comme aussi un calibre des particules de 100 à 300 nm en une proportion qui correspond à 150 à 400 parties en poids d'une dispersion à 50% en poids.